(19) Europäisches Patentamt
European Patent Office
Office européen des brevets

(11) **EP 3 370 382 A1**

(12) **EUROPEAN PATENT APPLICATION**
published in accordance with Art. 153(4) EPC

(43) Date of publication:
**05.09.2018 Bulletin 2018/36**

(51) Int Cl.:
*H04L 27/32* *(2006.01)*

(21) Application number: **15907001.0**

(22) Date of filing: **30.10.2015**

(86) International application number:
**PCT/CN2015/093374**

(87) International publication number:
**WO 2017/070939 (04.05.2017 Gazette 2017/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Fujitsu Limited**
**Kawasaki-shi, Kanagawa 211-8588 (JP)**

(72) Inventors:
- **YANG, Fan**
  **Beijing 100025 (CN)**
- **WANG, Xin**
  **Beijing 100025 (CN)**
- **WU, Jianming**
  **Beijing 100025 (CN)**

(74) Representative: **Haseltine Lake LLP**
**Lincoln House, 5th Floor**
**300 High Holborn**
**London WC1V 7JH (GB)**

(54) **MULTI-CARRIER MODULATION APPARATUS AND MULTI-CARRIER DEMODULATION APPARATUS, METHOD AND SYSTEM**

(57) Embodiments of this disclosure provide a multicarrier modulation apparatus and method, a multicarrier demodulation apparatus and method and a system. In the embodiments of this disclosure, a new semi-orthogonal multicarrier waveform is designed for data modulation, odd-numbered subcarriers and even-numbered subcarriers of the waveform being respectively orthogonal to each other, but odd-numbered and even-numbered carriers being not orthogonal to each other, and sinusoid parts of the subcarriers being periodically reversed for a predefined number of times. In comparison with legacy orthogonal frequency division multiplexing (OFDM) multicarrier, the subcarrier spacing of such multicarrier is halved. Hence, the spectral efficiency is doubled, and as the sinusoid parts are reversed, the system performance is improved.

1001

multiple modulation symbols of data to be transmitted are modulated onto multiple subcarriers; wherein, a subcarrier spacing between subcarriers of the multiple subcarriers is a reciprocal of a predefined multiple of a symbol duration, the predefined multiple being greater than 1, and sinusoid parts of the subcarriers being periodically reversed for a predefined number of times

1002

data on the subcarriers are added up, so as to obtain modulated data to be transmitted

**Fig. 10**

**Description**

Field

This disclosure relates to the field of communications technologies, and in particular to a multicarrier modulation apparatus and method, a multicarrier demodulation apparatus and method and a system.

Background

Multicarrier modulation (MCM) employs multiple carrier signals. It decomposes a data stream into a number of sub-data streams, so that the sub-data streams have much lower transmission bit rates, and these data are used to respectively modulate a number of carriers. Therefore, in a multicarrier modulation channel, the data transmission rate is relatively low, and the symbol period is lengthened. As long as the delay spread is smaller than the symbol period by a certain ratio, no inter-code interference will be resulted. Hence, multicarrier modulation is insensitive to the time dispersion of the channel. The multicarrier modulation may be implemented in multiple ways, such as multitone realization, orthogonal multicarrier modulation (orthogonal frequency division multiplexing, OFDM) modulation, MC-CDMA (multi-carrier-code division multiple access (CDMA) and coded MCM. Among them, OFDM can overcome multipath-fading interference and is a hot topic in current research.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

In an OFDM system, the sub-carriers are orthogonal to each other, thereby limiting improvement of the spectral efficiency.

Embodiments of this disclosure provide a multicarrier modulation apparatus and method, and a system, so as to improve spectral efficiency.

According to a first aspect of the embodiments of this disclosure, there is provided a multicarrier modulation apparatus, including:

a modulating unit configured to modulate multiple modulation symbols of data to be transmitted onto multiple sub-carriers; wherein, a subcarrier spacing between subcarriers of the multiple subcarriers is a reciprocal of a predefined multiple of a symbol duration, the predefined multiple being greater than 1, and sinusoid parts of the subcarriers being periodically reversed for a predefined number of times; and

a calculating unit configured to add up data on the subcarriers, to obtain modulated data to be transmitted.

According to a second aspect of the embodiments of this disclosure, there is provided a multicarrier demodulation apparatus, including:

a filtering unit configured to filter received data, to obtain demodulated data on corresponding subcarriers; wherein, a subcarrier spacing between subcarriers of the multiple subcarriers is a reciprocal of a predefined multiple of a symbol duration, the predefined multiple being greater than 1, and sinusoid parts of the subcarriers being periodically reversed for a predefined number of times; and

an equalizing unit configured to perform frequency-domain equalization processing on the demodulated data to which the subcarriers correspond, to obtain the demodulated data with no inter-subcarrier-interference.

According to a third aspect of the embodiments of this disclosure, there is provided a transmitter, including the apparatus as described in the first aspect.

According to a fourth aspect of the embodiments of this disclosure, there is provided a receiver, including the apparatus as described in the second aspect.

According to a fifth aspect of the embodiments of this disclosure, there is provided a multicarrier communications system, including a transmitter and a receiver; wherein,

the transmitter is configured to:

modulate multiple modulation symbols of data to be transmitted onto multiple subcarriers, and add up data on the subcarriers, to obtain modulated data to be transmitted; wherein, a subcarrier spacing between subcarriers of the multiple subcarriers is a reciprocal of a predefined multiple of a symbol duration, the predefined multiple being greater than 1, and sinusoid parts of the subcarriers being periodically reversed for a predefined number of times; and the receiver is configured to:
filter received data, to obtain demodulated data on corresponding subcarriers, and perform frequency-domain equalization processing on the demodulated data to which the subcarriers correspond, to obtain demodulated data with no inter-subcarrier-interference.

According to a sixth aspect of the embodiments of this disclosure, there is provided a multicarrier modulation method, including:

modulating multiple modulation symbols of data to be transmitted onto multiple subcarriers; wherein, a subcarrier spacing between subcarriers of the multiple subcarriers is a reciprocal of a predefined multiple of a symbol duration, the predefined multiple being greater than 1, and sinusoid parts of the subcarriers being periodically reversed for a predefined number of times; and
adding up data on the subcarriers, to obtain modulated data to be transmitted.

According to a seventh aspect of the embodiments of this disclosure, there is provided a multicarrier demodulation method, including:

filtering received data, to obtain demodulated data on corresponding subcarriers; wherein, a subcarrier spacing between subcarriers of the multiple subcarriers is a reciprocal of a predefined multiple of a symbol duration, the predefined multiple being greater than 1, and sinusoid parts of the subcarriers being periodically reversed for a predefined number of times; and
performing frequency-domain equalization processing on the demodulated data to which the subcarriers correspond, to obtain the demodulated data with no inter-subcarrier-interference.

An advantage of the embodiments of this disclosure exists in that a new semi-orthogonal frequency division multiplexing (SOFDM) multicarrier is used for data modulation, and in comparison with legacy orthogonal frequency division multiplexing (OFDM) multicarrier, the subcarrier spacing of this SOFDM multicarrier is halved. Hence, the spectral efficiency is improved, and as the sinusoid parts of the subcarriers are reversed, the system performance is improved.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:

FIG. 1 is a schematic diagram of a structure of a multicarrier modulation apparatus of an embodiment of this disclosure;
FIG. 2 is a schematic diagram of sinusoid parts of a subcarrier that are reversed once;
FIG. 3 is a schematic diagram of sinusoid parts of a subcarrier that are reversed twice;
FIG. 4 is a schematic diagram of a transmitter end of an SOFDM system of this embodiment;
FIG. 5 is a schematic diagram of a structure of a multicarrier demodulation apparatus of an embodiment of this disclosure;
FIG. 6 is a schematic diagram of a receiver end of an SOFDM system of this embodiment; FIG.
FIG. 7 is a schematic diagram of a hardware structure of a transmitter of this embodiment;
FIG. 8 is a schematic diagram of a hardware structure of a receiver of this embodiment;
FIG. 9 is a schematic diagram of a hardware structure of a multicarrier communications system of this embodiment;

FIG. 10 is a flowchart of a multicarrier modulation method of this embodiment; and

FIG. 11 is a flowchart of a multicarrier demodulation method of this embodiment.

Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims. The various embodiments of the present disclosure will be described below with reference to the accompanying drawings. These embodiments are only exemplary and are not limitations of the present disclosure.

Embodiment 1

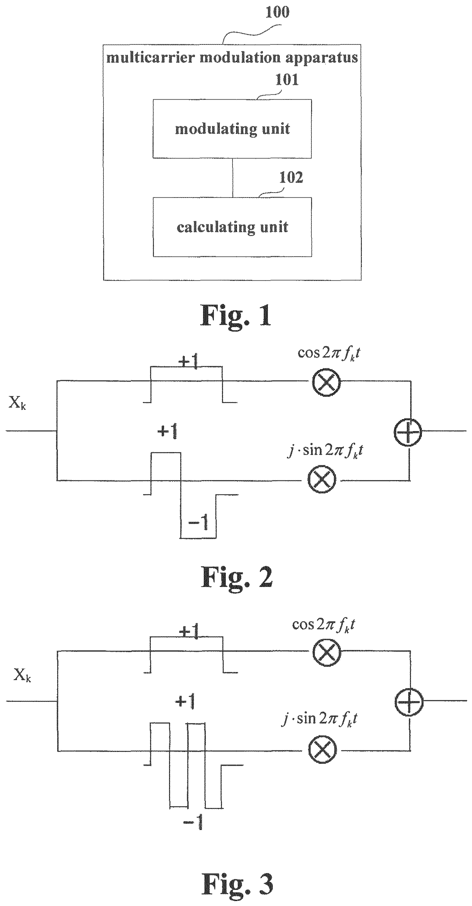

This embodiment provides a multicarrier modulation apparatus, applicable to a transmitter end of a multi-carrier communications system. FIG. 1 is a schematic diagram of a structure of the apparatus. As shown in FIG. 1, the apparatus 100 includes a modulating unit 101 and a calculating unit 102.

The modulating unit 101 is configured to modulate multiple modulation symbols of data to be transmitted onto multiple subcarriers; wherein, a subcarrier spacing between subcarriers of the multiple subcarriers is a reciprocal of a predefined multiple of a symbol duration, the predefined multiple being greater than 1, and sinusoid parts of the subcarriers being periodically reversed for a predefined number of times.

And the calculating unit 102 is configured to add up data on the subcarriers, so as to obtain modulated data to be transmitted.

In this embodiment, the predetermined multiple is, for example, 1.5 times, 2 times, 4 times, or 8 times, and the like. In this embodiment, the predetermined multiple being two times is taken as an example. However, those skilled in the art may derive implementations of other multiples according to the implementation of this embodiment, and the implementations of other multiples shall not be described here in detail.

In this embodiment, a new semi-orthogonal frequency division multiplexing (SOFDM) multicarrier waveform is designed. In the SOFDM, a subcarrier spacing between subcarriers of the multiple subcarriers is a reciprocal of 2 times of a symbol duration, and sinusoid parts of the subcarriers being periodically reversed for a predefined number of times, such as once, twice, or more times. With the increase of reversal times, the system performance will become better and better, but the system bandwidth will gradually increase, hence, the selection of reversal times is a tradeoff between system performance and system bandwidth.

In this embodiment, waveforms of the subcarriers when the reversals times is N/2 may be expressed as:

$$
\mathrm{p}_k\left(t\right)=\begin{cases}
\sqrt{\dfrac{1}{T}}\cdot e^{j\cdot 2\pi f_k t} & \dfrac{m-1}{N}\cdot T\le t\le \dfrac{m}{N}\cdot T, m\in odd \\[2mm]
\sqrt{\dfrac{1}{T}}\cdot e^{-j\cdot 2\pi f_k t} & \dfrac{m-1}{N}\cdot T\le t\le \dfrac{m}{N}\cdot T, m\in even \\[2mm]
0 & others
\end{cases};
$$

where, $f_k=\dfrac{k}{2T}$ $k\in Z$, k is a subcarrier index, Z denotes an integer domain, and T is a symbol duration; m is an index of a time segment within a symbol, and $1\le m\le N$; N/2 is the reversals times, N is a power of 2, such as 2, 4, 8, and 16, etc.; and $f_k=k\cdot\Delta f$, $\Delta f$ is a subcarrier spacing (with a unit of Hz). In this embodiment, $\Delta f=\dfrac{1}{2T}$, and in comparison with a legacy OFDM $(\Delta f=\dfrac{1}{T})$, subcarrier spacing is halved.

In this embodiment, in the SOFDM, the orthogonality between subcarriers is lost; however, odd-numbered subcarriers of multiple subcarriers of the SOFDM are still orthogonal to each other, and likewise, the even-numbered subcarriers of the multiple subcarriers are also orthogonal to each other. As the subcarriers are halved, spectral efficiency may be higher.

FIG. 2 is a schematic diagram of sinusoid parts of a subcarrier that are reversed once, and FIG. 3 is a schematic diagram of sinusoid parts of the subcarrier that are reversed twice. In FIG.2, $X_k$ is a modulation symbol on a *k-th* subcarrier. As shown in FIG. 2 and FIG. 3, since the sinusoid parts of the subcarrier in this embodiment are periodically reversed, the subcarrier has a feature of a zero-correlation window (ZCW), and the more frequently reversed, the larger the zero correlation window is. By enlarging the size of the zero-correlation window, system performance may be improved, and in particular, its system performance may approach to an orthogonal multicarrier system continuously.

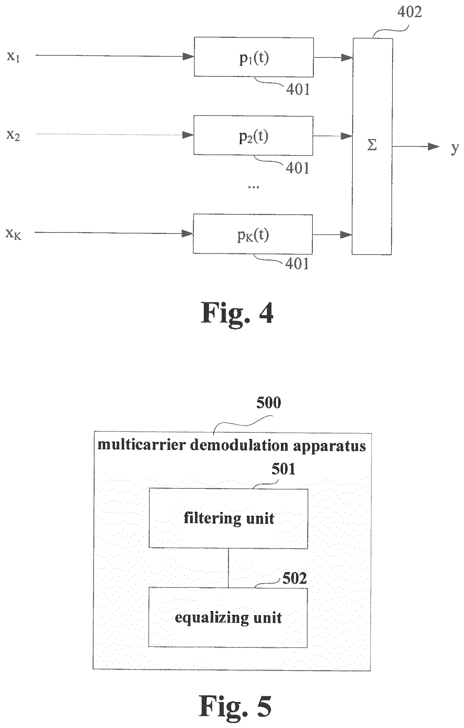

In this embodiment, the modulating unit 101 may be implemented by multiple subcarrier modulators (a subcarrier modulator group), and the calculating unit 102 may be implemented by an adder. FIG. 4 is a schematic diagram of a transmitter end of the SOFDM system of this embodiment. As shown in FIG. 4, for multiple modulation symbols $x_1$-$x_K$ of the data to be transmitted, K is a total number of the subcarriers, and multiple subcarrier modulators 401 multiply them respectively by the subcarriers $p_1(t)$-$p_K(t)$ of the SOFDM system, thereby modulating them onto the multiple subcarriers of the SOFDM of this embodiment. And the adder 402 adds up the data on the subcarriers to obtain modulated data y of data to be transmitted. In this embodiment, y may be expressed as:

$$y = \sqrt{\frac{1}{T} \sum_{k=1}^{K} x_k \cdot p_i(t)}, \quad f_k = \frac{k}{2T}.$$

In this embodiment, only the function modules at the transmitter end related to the implementation of functions of this disclosure are described. However, this embodiment is not limited thereto. In a particular implementation, in order to implement transmission of data, the transmitter end may further include such functional modules as an analog-to-digital conversion module and a serial-to-parallel conversion module, etc. For details, reference may be made to the art related to the transmitter end.

With the multicarrier modulation apparatus of this embodiment, since the subcarrier spacing is halved, the spectrum efficiency is improved, and the system performance is improved due to the feature of the zero correlation window.

Embodiment 2

This embodiment provides a multicarrier demodulation apparatus, applicable to a receiver end. Processing of this apparatus corresponds to that of the apparatus in Embodiment 1, with contents identical those in Embodiment 1 being not going to be described herein any further.

FIG. 5 is a schematic diagram of a structure of the multicarrier demodulation apparatus. As shown in FIG. 5, the multicarrier demodulation apparatus 500 includes a filtering unit 501 and an equalizing unit 502. The filtering unit 501 is configured to filter received data, so as to obtain demodulated data on corresponding subcarriers; wherein, a subcarrier spacing between subcarriers of the multiple subcarriers is a reciprocal of a predefined multiple of a symbol duration, the predefined multiple being greater than 1, and sinusoid parts of the subcarriers being periodically reversed for a predefined number of times; and the equalizing unit 502 is configured to perform frequency-domain equalization processing on the demodulated data to which the subcarriers correspond, so as to obtain the demodulated data with no inter-subcarrier-interference.

In this embodiment, the predetermined multiple being two times is taken as an example. However, as described above, this embodiment is not limited thereto.

In this embodiment, the received data refer to data received from a receiver, which are a combination of the modulated data y of data to be transmitted and a noise n, and are denoted by r=y+n. As described in Embodiment 1, the modulated data y are obtained by modulating the data to be transmitted onto multiple subcarriers of this embodiment, and a subcarrier spacing between subcarriers of the multiple subcarriers is a reciprocal of two times of a symbol duration, and sinusoid parts of the subcarriers are periodically reversed for a predefined number of times, such as once, twice, or more times.

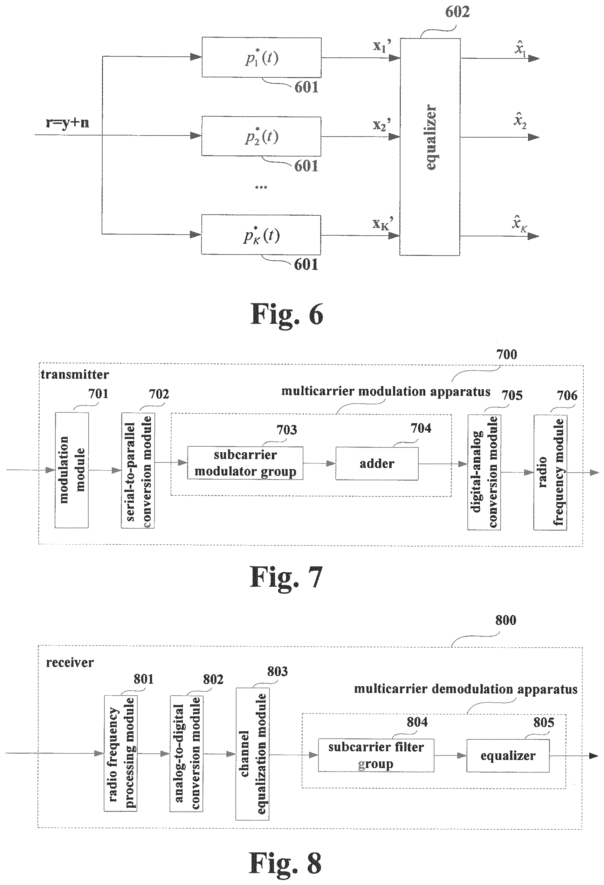

In this embodiment, the filtering unit 501 may be implemented by multiple subcarrier matched filters (a subcarrier filter group). FIG. 6 is a schematic diagram of a receiver end of an SOFDM system of this embodiment. As shown in FIG. 6, for the received data r, multiple subcarrier matched filters 601 multiply them respectively by conjugates the subcarriers of the multiple subcarriers and then perform definite integration of 0-T thereon, so as to perform filtering operation on the received data r to obtain demodulated data $x_1$'-$x_K$' (K is a total number of the subcarriers) corresponding to the subcarriers.

In this embodiment, as described above, as the orthogonality between the subcarriers is lost, the subcarrier correlations coefficient may be defined as:

$$\rho_{k1,k2} \triangleq \int_0^T \mathrm{p}_{k1}(t) \cdot \mathrm{p}_{k2}^*(t) \, dt \; ;$$

where, k1 and k2 are indices of subcarriers.

In this embodiment, assuming that a noise is an AWGN (additive white Gaussian noise), a result of the receiver after being performed subcarrier matched filtering is:

$$\mathbf{x}' \triangleq \begin{bmatrix} x_1' \\ x_2' \\ \cdots \\ x_K' \end{bmatrix} = \mathbf{R} \cdot \mathbf{x} + \mathbf{n} \; ;$$

where, x' is defined as a matrix of the demodulated data to which the subcarriers correspond, R is a subcarrier frequency-

$$\mathbf{R}_{k1,k2} \triangleq \int_0^T \mathrm{p}_{k1}(t) \cdot \mathrm{p}_{k2}^*(t) \, dt \; ,$$

domain correlation matrix, with its elements being                    k1 and k2 being indices of subcarriers, x is a modulation symbol matrix of the data to be transmitted, and n is a noise term.

In this embodiment, it can be seen from the above results that the matrix x' of the demodulated data to which the subcarriers correspond is a sum of a product of the subcarrier frequency domain correlation matrix R and the matrix x of the data carried on the subcarriers and the noise term n.

In this embodiment, the equalizing unit 502 performs frequency-domain equalization processing on the demodulated data to which the subcarriers correspond to obtain demodulated data with no inter-subcarrier-interference.

In this embodiment, the equalizing unit 502 may be implemented by an equalizer, such as the equalizer 602 shown in FIG. 6, and may also be implemented by software.

In this embodiment, a detailed method of frequency domain equalization processing is not limited, and the following description shall be given by way of two examples.

In one implementation, the equalizing unit 502 may perform linear equalization on the demodulated data to which the subcarriers correspond by using a zero forcing algorithm, so as to obtain the demodulated data with no inter-subcarrier-interference. For example, the demodulated data with no inter-subcarrier-interference may be obtained according to a formula as below:

$$\hat{\mathbf{x}} = \left( \mathbf{R}^{\mathrm{H}} \cdot \mathbf{R} \right)^{-1} \cdot \mathbf{R}^{\mathrm{H}} \cdot \mathbf{x}' \; ;$$

where, $\hat{x}$ is the demodulated data with no inter-subcarrier-interference, R is a subcarrier correlation matrix, which is a full rank matrix, $R^H$ is a conjugate transpose of the subcarrier correlation matrix, and x' is a matrix of the demodulated data to which the subcarriers correspond.

In another implementation, the equalizing unit 502 may perform linear equalization on the demodulated data to which the subcarriers correspond by using a least mean square algorithm, so as to obtain the demodulated data with no inter-subcarrier-interference. For example, the demodulated data with no inter-subcarrier-interference may be obtained according to a formula as below:

$$\hat{\mathbf{x}} = \left( \mathbf{R}^{\mathrm{H}} \cdot \mathbf{R} + \sigma^2 \cdot \mathbf{R} \right)^{-1} \cdot \mathbf{R}^{\mathrm{H}} \cdot \mathbf{x}' \; ;$$

where, $\hat{x}$ is the demodulated data with no inter-subcarrier-interference, R is a subcarrier correlation matrix, which is a full rank matrix, $R^H$ is a conjugate transpose of the subcarrier correlation matrix, $\sigma^2$ is white noise power, and x' is a matrix of the demodulated data to which the subcarriers correspond.

In this embodiment, the matrix R is a full rank matrix. If the matrix R is not a full rank matrix, the size of the zero correlation window may be expanded, such as increasing the number of reversals as described above, until the matrix R is a full rank matrix.

In this embodiment, only the function modules at the receiver end related to the implementation of functions of this disclosure are described. However, this embodiment is not limited thereto. In a particular implementation, in order to implement reception of data, the receiver end may further include such functional modules as a channel equalizing module and a parallel-to-serial conversion module, etc. For details, reference may be made to the art related to the receiver end.

With the multicarrier demodulation apparatus of this embodiment, since the subcarrier spacing is halved, the spectrum efficiency is improved, and the system performance is improved due to the feature of the zero correlation window.

Embodiment 3

This embodiment provides a transmitter.

FIG. 7 is a schematic diagram of a hardware structure of the transmitter 700 of this embodiment. As shown in FIG. 7, the transmitter 700 includes a modulation module 701, a serial-to-parallel conversion module 702, a subcarrier modulator group 703, an adder 704, a digital-analog conversion module 705, and a radio frequency module 706. It should be noted that this figure is illustrative only, and other types of structures may also be used to supplement or replace the structure to implement telecommunications functions or other functions.

In this embodiment, the related art may be referred to for functions of the modulation module 701, the serial-to-parallel conversion module 702, the digital-analog conversion module 705 and the radio frequency module 706. And the subcarrier modulator group 703 and the adder 704 together constitute the multicarrier modulation apparatus, which may be implemented by the multicarrier modulation apparatus of Embodiment 1, the contents of which being incorporated herein, and being not going to be described herein any further.

It should be noted that the transmitter 700 does not necessarily include all the components shown in FIG. 7; moreover, the transmitter 700 may include components not shown in FIG. 7, and reference may be made to the related art.

With the transmitter of this embodiment, spectral efficiency and system performance may be improved.

Embodiment 4

This embodiment provides a receiver.

FIG. 8 is a schematic diagram of a hardware structure of the receiver 800 of this embodiment. As shown in FIG. 8, the receiver 800 may include a radio frequency processing module 801, an analog-to-digital conversion module 802, a channel equalization module 803, a subcarrier filter group 804, and an equalizer 805. It should be noted that this figure is illustrative only, and other types of structures may also be used to supplement or replace the structure to implement telecommunications functions or other functions.

In this embodiment, the related art may be referred to for functions of the radio frequency processing module 801, the analog-to-digital conversion module 802, and the channel equalization module 803. And the subcarrier filter group 804 and the equalizer 805 together constitute a multicarrier demodulation apparatus, which may be implemented by the multicarrier demodulation apparatus of Embodiment 2, the contents of which being incorporated herein, and being not going to be described herein any further.

It should be noted that the receiver 800 does not necessarily include all the components shown in FIG. 8; moreover, the receiver 800 may include components not shown in FIG. 8, and reference may be made to the related art.

With the receiver of this embodiment, spectral efficiency and system performance may be improved.

Embodiment 5

This embodiment provides a multicarrier communications system.

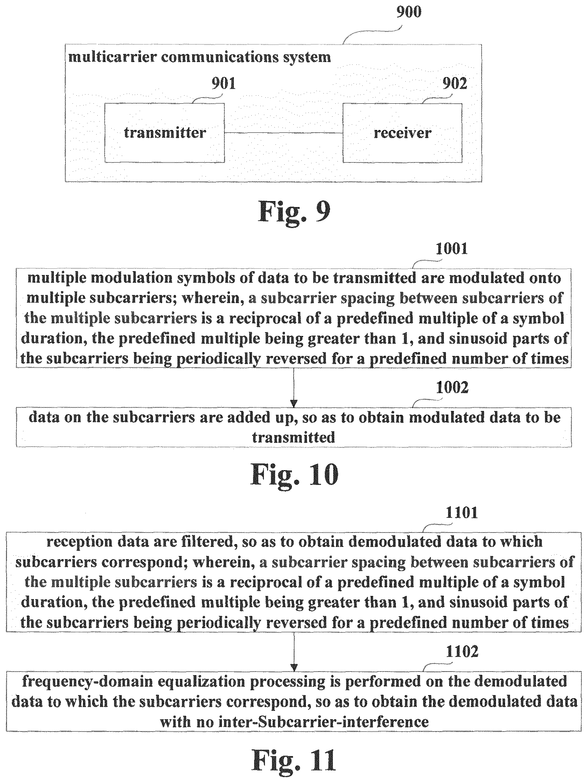

FIG. 9 is a schematic diagram of a hardware structure of the multicarrier communications system of this embodiment. As shown in FIG. 9, the multicarrier communications system 900 includes a transmitter 901 and a receiver 902.

In this embodiment, the transmitter 901 is configured to: modulate multiple modulation symbols of data to be transmitted onto multiple subcarriers, and add up data on the subcarriers, so as to obtain modulated data to be transmitted; wherein, a subcarrier spacing between subcarriers of the multiple subcarriers is a reciprocal of a predefined multiple of a symbol duration, the predefined multiple being greater than 1, such as two times, and sinusoid parts of the subcarriers being periodically reversed for a predefined number of times. The transmitter 901 may be implemented by the transmitter 700 in Embodiment 3, the contents of which being incorporated herein, and being not going to be described herein any further.

In this embodiment, the receiver 902 is configured to: filter received data, so as to obtain demodulated data on corresponding subcarriers, and perform frequency-domain equalization processing on the demodulated data to which the subcarriers correspond, so as to obtain demodulated data with no inter-subcarrier-interference. In this embodiment, a subcarrier spacing between subcarriers of the multiple subcarriers is a reciprocal of a predefined multiple of a symbol duration, the predefined multiple being greater than 1, such as two times, and sinusoid parts of the subcarriers being periodically reversed for a predefined number of times. The receiver 902 may be implemented by the receiver 800 in Embodiment 4, the contents of which being incorporated herein, and being not going to be described herein any further.

With the multicarrier communications system of this embodiment, spectral efficiency and system performance may be improved.

Embodiment 6

This embodiment provides a multicarrier modulation method. As principles of the method for solving problems are similar to that of the apparatus in Embodiment 1, the implantation of the apparatus in Embodiment 1 may be referred to for implementation of the method, with identical contents being not going to be described herein any further.
FIG. 10 is a flowchart of the method. As shown in FIG. 10, the method includes:

step 1001: multiple modulation symbols of data to be transmitted are modulated onto multiple subcarriers; wherein, a subcarrier spacing between subcarriers of the multiple subcarriers is a reciprocal of a predefined multiple of a symbol duration, the predefined multiple being greater than 1, and sinusoid parts of the subcarriers being periodically reversed for a predefined number of times; and
step 1002: data on the subcarriers are added up, so as to obtain modulated data to be transmitted.

In this embodiment, the predefined multiple is two times, odd-numbered subcarriers of the multiple subcarriers are orthogonal to each other, and even-numbered subcarriers of the multiple subcarriers are orthogonal to each other.
With the method of this embodiment, spectral efficiency and system performance may be improved.

Embodiment 7

This embodiment provides a multicarrier demodulation method. As principles of the method for solving problems are similar to that of the apparatus in Embodiment 2, the implantation of the apparatus in Embodiment 2 may be referred to for implementation of the method, with identical contents being not going to be described herein any further.
FIG. 11 is a flowchart of the method. As shown in FIG. 11, the method includes:

step 1101: received data are filtered, so as to obtain demodulated data on corresponding subcarriers; wherein, a subcarrier spacing between subcarriers of the multiple subcarriers is a reciprocal of a predefined multiple of a symbol duration, the predefined multiple being greater than 1, and sinusoid parts of the subcarriers being periodically reversed for a predefined number of times; and
step 1102: frequency-domain equalization processing is performed on the demodulated data to which the subcarriers correspond, so as to obtain the demodulated data with no inter-subcarrier-interference.

In this embodiment, the predefined multiple is two times.
In this embodiment, a matrix of the demodulated data to which the subcarriers correspond is a sum of a product of a subcarrier frequency-domain correlation matrix and a matrix of data carried by the subcarriers and a noise term.
In one implementation of step 1102, a zero forcing algorithm may be used to perform linear equalization on the demodulated data to which the subcarriers correspond, so as to obtain the demodulated data with no inter-subcarrier-interference. For example, the demodulated data with no inter-subcarrier-interference may be obtained by using a formula as below:

$$\hat{\mathbf{x}} = \left(\mathbf{R}^{H} \cdot \mathbf{R}\right)^{-1} \cdot \mathbf{R}^{H} \cdot \mathbf{x}';$$

where, R is a subcarrier correlation matrix, which is a full rank matrix, $R^{H}$ is a conjugate transpose of the subcarrier correlation matrix, and x' is a matrix of the demodulated data to which the subcarriers correspond.
In another implementation of step 1102, a least mean square algorithm may be used to perform linear equalization on the demodulated data to which the subcarriers correspond, so as to obtain the demodulated data with no inter-subcarrier-interference. For example, the demodulated data with no inter-subcarrier-interference may be obtained by using a formula as below:

$$\hat{\mathbf{x}} = \left(\mathbf{R}^{H} \cdot \mathbf{R} + \sigma^{2} \cdot \mathbf{R}\right)^{-1} \cdot \mathbf{R}^{H} \cdot \mathbf{x}';$$

where, R is a subcarrier correlation matrix, which is a full rank matrix, $R^{H}$ is a conjugate transpose of the subcarrier correlation matrix, $\sigma^2$ is white noise power, and x' is a matrix of the demodulated data to which the subcarriers correspond.
With the method of this embodiment, spectral efficiency and system performance may be improved.

An embodiment of the present disclosure provides a computer readable program, which, when executed in a multicarrier modulation apparatus or a transmitter, will cause a computer to carry out the method as described in Embodiment 6 in the multicarrier modulation apparatus or the transmitter.

An embodiment of the present disclosure provides a computer storage medium, including a computer readable program, which will cause a computer to carry out the method as described in Embodiment 6 in a multicarrier modulation apparatus or a transmitter.

An embodiment of the present disclosure provides a computer readable program, which, when executed in a multicarrier demodulation apparatus or a receiver, will cause a computer to carry out the method as described in Embodiment 7 in the multicarrier demodulation apparatus or the receiver.

An embodiment of the present disclosure provides a computer storage medium, including a computer readable program, which will cause a computer to carry out the method as described in Embodiment 7 in a multicarrier demodulation apparatus or a receiver.

The above apparatuses of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

**Claims**

1. A multicarrier modulation apparatus, comprising:

    a modulating unit configured to modulate multiple modulation symbols of data to be transmitted onto multiple subcarriers; wherein, a subcarrier spacing between subcarriers of the multiple subcarriers is a reciprocal of a predefined multiple of a symbol duration, the predefined multiple being greater than 1, and sinusoid parts of the subcarriers being periodically reversed for a predefined number of times; and
    a calculating unit configured to add up data on the subcarriers to obtain modulated data to be transmitted.

2. The apparatus according to claim 1, wherein the predefined multiple is 2 times.

3. The apparatus according to claim 2, wherein odd-numbered subcarriers of the multiple subcarriers are orthogonal to each other, and even-numbered subcarriers of the multiple subcarriers are orthogonal to each other.

4. A multicarrier demodulation apparatus, comprising:

    a filtering unit configured to filter received data to obtain demodulated data on corresponding subcarriers; wherein, a subcarrier spacing between subcarriers of the multiple subcarriers is a reciprocal of a predefined multiple of a symbol duration, the predefined multiple being greater than 1, and sinusoid parts of the subcarriers being periodically reversed for a predefined number of times; and
    an equalizing unit configured to perform frequency-domain equalization processing on the demodulated data to which the subcarriers correspond to obtain the demodulated data with no inter-subcarrier-interference.

5. The apparatus according to claim 4, wherein the predefined multiple is 2 times.

6. The apparatus according to claim 5, wherein a matrix of the demodulated data to which the subcarriers correspond is a sum of a product of a subcarrier frequency-domain correlation matrix and a matrix of data carried by the subcarriers and a noise term.

7. The apparatus according to claim 6, wherein elements of the subcarrier frequency-domain correlation matrix are defined as:

$$\mathbf{R}_{k1,k2} \triangleq \int_0^T \mathrm{p}_{k1}(t) \cdot \mathrm{p}_{k2}^*(t) dt \,;$$

where, k1 and k2 are indexes of subcarrier, respectively, $\mathrm{p}_{k1}(t)$ is a subcarrier k1, and $\mathrm{p}_{k2}^*(t)$ is a conjugate of the subcarrier k2.

8. The apparatus according to claim 4, wherein the equalizing unit performs linear equalization on the demodulated data to which the subcarriers correspond by using a zero forcing algorithm to obtain the demodulated data with no inter-subcarrier-interference as below:

$$\hat{\mathbf{x}} = \left(\mathbf{R}^{\mathrm{H}} \cdot \mathbf{R}\right)^{-1} \cdot \mathbf{R}^{\mathrm{H}} \cdot \mathbf{x}' \,;$$

where, R is a subcarrier correlation matrix, which is a full rank matrix, $R^H$ is a conjugate transpose of the subcarrier correlation matrix, and x' is a matrix of the demodulated data to which the subcarriers correspond.

9. The apparatus according to claim 4, wherein the equalizing unit performs linear equalization on the demodulated data to which the subcarriers correspond by using a least mean square algorithm to obtain the demodulated data with no inter-subcarrier-interference as below:

$$\hat{\mathbf{x}} = \left(\mathbf{R}^{\mathrm{H}} \cdot \mathbf{R} + \sigma^2 \cdot \mathbf{R}\right)^{-1} \cdot \mathbf{R}^{\mathrm{H}} \cdot \mathbf{x}' \,;$$

where, R is a subcarrier correlation matrix, which is a full rank matrix, $R^H$ is a conjugate transpose of the subcarrier correlation matrix, $\sigma^2$ is white noise power, and x' is a matrix of the demodulated data to which the subcarriers correspond.

10. A multicarrier communications system, comprising a transmitter and a receiver; wherein,
the transmitter is configured to:

modulate multiple modulation symbols of data to be transmitted onto multiple subcarriers, and add up data on the subcarriers to obtain modulated data to be transmitted; wherein, a subcarrier spacing between subcarriers of the multiple subcarriers is a reciprocal of a predefined multiple of a symbol duration, the predefined multiple being greater than 1, and sinusoid parts of the subcarriers being periodically reversed for a predefined number of times;
and the receiver is configured to:
filter received data to obtain demodulated data on corresponding subcarriers, and perform frequency-domain equalization processing on the demodulated data to which the subcarriers correspond to obtain demodulated data with no inter-subcarrier-interference.

11. The system according to claim 10, wherein the predefined multiple is 2 times.

**Fig. 1**

**Fig. 2**

**Fig. 3**

402

$x_1$ → $p_1(t)$ 401 →

$x_2$ → $p_2(t)$ 401 →

...

$x_K$ → $p_K(t)$ 401 →

Σ → y

**Fig. 4**

500

**multicarrier demodulation apparatus**

501

**filtering unit**

502

**equalizing unit**

**Fig. 5**

602

601

$p_1^*(t)$

601

$p_2^*(t)$

601

$p_K^*(t)$

r=y+n

$x_1'$

$x_2'$

$x_K'$

equalizer

$\hat{x}_1$

$\hat{x}_2$

$\hat{x}_K$

...

**Fig. 6**

700

transmitter

701

702

multicarrier modulation apparatus

705

706

703

704

modulation module

serial-to-parallel conversion module

subcarrier modulator group

adder

digital-analog conversion module

radio frequency module

**Fig. 7**

800

receiver

801

802

803

multicarrier demodulation apparatus

804

805

radio frequency processing module

analog-to-digital conversion module

channel equalization module

subcarrier filter group

equalizer

**Fig. 8**

900

multicarrier communications system

901

transmitter

902

receiver

**Fig. 9**

1001

multiple modulation symbols of data to be transmitted are modulated onto multiple subcarriers; wherein, a subcarrier spacing between subcarriers of the multiple subcarriers is a reciprocal of a predefined multiple of a symbol duration, the predefined multiple being greater than 1, and sinusoid parts of the subcarriers being periodically reversed for a predefined number of times

1002

data on the subcarriers are added up, so as to obtain modulated data to be transmitted

**Fig. 10**

1101

reception data are filtered, so as to obtain demodulated data to which subcarriers correspond; wherein, a subcarrier spacing between subcarriers of the multiple subcarriers is a reciprocal of a predefined multiple of a symbol duration, the predefined multiple being greater than 1, and sinusoid parts of the subcarriers being periodically reversed for a predefined number of times

1102

frequency-domain equalization processing is performed on the demodulated data to which the subcarriers correspond, so as to obtain the demodulated data with no inter-Subcarrier-interference

**Fig. 11**

## INTERNATIONAL SEARCH REPORT

| International application No. |
| --- |
| **PCT/CN2015/093374** |

### A. CLASSIFICATION OF SUBJECT MATTER

H04L 27/32 (2006.01) i

According to International Patent Classification (IPC) or to both national classification and IPC

### B. FIELDS SEARCHED

Minimum documentation searched (classification system followed by classification symbols)

H04L; H04W; H04M

Documentation searched other than minimum documentation to the extent that such documents are included in the fields searched

Electronic data base consulted during the international search (name of data base and, where practicable, search terms used)

CNTXT; CNABS, CNKI, CJFD, VEN, USTXT: sinusoidal signal, sine wave, sine, sin, periodic, modulate, multi-carrier, reverse, change, polarity, inversion, sub carrier, interval, positive, negative

### C. DOCUMENTS CONSIDERED TO BE RELEVANT

| Category* | Citation of document, with indication, where appropriate, of the relevant passages | Relevant to claim No. |
| --- | --- | --- |
| A | CN 103905931 A (BEIJING UNIVERSITY OF POSTS AND TELECOMMUNICATIONS), 02 July 2014 (02.07.2014), the whole document | 1-11 |
| A | US 2004127188 A1 (ALCATEL), 01 July 2004 (01.07.2004), the whole document | 1-11 |
| A | CN 101895222 A (HEILONGJIANG INSTITUTE OF SCIENCE AND TECHNOLOGY), 24 November 2010 (24.11.2010), the whole document | 1-11 |
| A | CN 1694447 A (YE, Jianguo), 09 November 2005 (09.11.2005), the whole document | 1-11 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 13 July 2016 (13.07.2016) | **21 July 2016 (21.07.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **HE, Liliang** Telephone No.: (86-10) **62089569** |
| --- | --- |

Form PCT/ISA/210 (second sheet) (July 2009)

## INTERNATIONAL SEARCH REPORT
Information on patent family members

International application No.

**PCT/CN2015/093374**

| Patent Documents referred in the Report | Publication Date | Patent Family | Publication Date |
|---|---|---|---|
| CN 103905931 A | 02 July 2014 | None | |
| US 2004127188 A1 | 01 July 2004 | EP 1435687 B1 | 07 September 2005 |
| | | CN 100517986 C | 22 July 2009 |
| | | US 7292836 B2 | 06 November 2007 |
| | | DE 60206065 T2 | 23 February 2006 |
| | | EP 1435687 A1 | 07 July 2004 |
| | | CN 1512674 A | 14 July 2004 |
| | | DE 60206065 D1 | 13 October 2005 |
| CN 101895222 A | 24 November 2010 | CN 101895222 B | 20 June 2012 |
| CN 1694447 A | 09 November 2005 | None | |

Form PCT/ISA/210 (patent family annex) (July 2009)